# EUROPEAN PATENT SPECIFICATION

(11) **EP 3 229 073 B1**
(45) Date of publication and mention of the grant of the patent: **31.10.2018**
(21) Application number: 17154618.7
(22) Date of filing: 03.02.2017
(51) Int. Cl.: G03B 35/08, G03B 37/04, G06T 19/00

(54) **THREE-DIMENSIONAL, 360-DEGREE VIRTUAL REALITY CAMERA SYSTEM**
DREI-DIMENSIONAL, 360-GRAD VIRTUELLES WIRKLICHKEIT KAMERASYSTEM
SYSTÈME DE CAMERAS POUR 360 DEGRÉS DE RÉALITÉ VIRTUELLE EN TROIS DIMENSIONS

(30) Priority: 06.04.2016 US 201662318822 P; 11.04.2016 US 201615096140; 31.01.2017 WO PCT/US2017/015834
(43) Date of publication of application: 11.10.2017
(73) Proprietor: Facebook, Inc., Menlo Park, CA 94025 (US)
(72) Inventor: CABRAL, Brian Keith, Menlo Park, CA California 94025 (US); BRIGGS, Forrest Samuel, Menlo Park, CA California 94025 (US); HSU, Joyce, Menlo Park, CA California 94025 (US); POZO, Albert Parra, Menlo Park, CA California 94025 (US); COWARD, Andrew, Menlo Park, CA California 94025 (US)
(74) Representative: Schröer, Gernot H.

(56) References cited:
- WO-A2-02/44808
- US-A1- 2004 246 333
- US-A1- 2015 254 871
- US-A1- 2015 373 269
- US-A1- 2016 088 280

## Description

### BACKGROUND

The disclosure relates generally to camera assemblies, and more specifically to three-dimensional (3D), 360-degree camera systems for virtual reality systems.

Virtual reality systems capture images and/or video of an environment with one or more cameras. The images and/or video captured by the cameras are reconstructed to create a virtual reality that a user can interact with. The configuration of the one or more cameras impacts the quality of the images captured and the ability to reconstruct the images for a seamless virtual reality experience. Hence, the configuration of the cameras and lower quality captured images can adversely affect a user's virtual reality experience.

WO 02/44808 A2 discloses an apparatus comprising a three-dimensional array of cameras, pointing out from common centres, wherein the cameras' principal optical axes meet at the centres. In the configuration thus formed, the lenses are situated on a curved surface, allowing for capturing images of the surrounding environment. The cameras may be mounted in designated gaps of a spherical object. In one disclosed configuration, the total number of lenses on the sphere is eighteen. Eight lenses are situated around the sphere equator for capturing a full 360 degree panoramic view, four lenses are situated around higher/lower lattitude on each side of the equator for capturing the view above and below the horizon, and a lens at each pole to complete a full spherical view.

US 2016/0088280 A1 discloses cameras of a camera system that may be arranged in an approximately circular configuration with cameras located at or near an outer edge of a camera body. The camera body may represent a mechanical structure, enclosure or casing that holds, contains or encloses cameras of the camera system as well as other devices that are part of the camera system, such as for example, one or more power supplies or processors. In an example, 24 cameras of the system are arranged in a circular configuration near an outer edge of the camera body, which has a circular shape. A centre point represents a centre of the body of the camera system, and the orientation of each camera pair is directed radially outward from the centre point. In particular embodiments, the camera system may include one or more top cameras which create a "roof" over an otherwise cylindrical side view captured by side cameras arranged along a periphery of the camera system. In particular embodiments, side cameras may refer to cameras arranged ina planar configuration with their respective orientations located within the same plane. In particular embodiments, the camera system may include one or more top cameras pointing up as well as one or more bottom cameras pointing down.

### SUMMARY

The camera system according to the invention is defined in claim 1. The camera system may be configured to capture images and/or video across 360 degrees of a local area, at least a portion of which may be in stereo. The camera system includes a plurality of peripheral cameras and one or more axis cameras. It includes a first rigid plate and a second rigid plate.

The plurality of peripheral cameras are arranged in a ring configuration around a center point of the camera system. The optical axis of each peripheral camera is within a plane, and each peripheral camera faces away from the center point, such that objects in the local area that are past a threshold distance from the center point are within fields of view of at least two peripheral cameras. Accordingly, the peripheral cameras are able to image objects that are past the threshold distance in stereo. The first rigid plate secures to top surfaces of the peripheral cameras, and the second rigid plate secures to bottom surfaces of the peripheral cameras, thereby creating a rigid structure. The rigid structure minimizes movements of the peripheral cameras relative to one another.

The one or more axis cameras include a top axis camera and optionally a bottom axis camera. The top axis camera is coupled to a top surface of the first rigid plate, and the bottom axis camera may be coupled to a bottom surface of the second rigid plate. In some embodiments, both the top axis camera and the bottom axis camera are arranged such that the optical axis of each camera is collinear with the alignment axis. In some embodiments, the plurality of axis cameras may include additional cameras coupled to the top surface of the first rigid plate, coupled to the bottom surface of the second rigid plate, or both. In some embodiments, one or more additional axis cameras may be positioned to provide stereo imaging with the top axis camera, the bottom axis camera, one or more peripheral camera, an additional axis camera, or some combination thereof.

The plurality of peripheral cameras and one or more axis cameras are configured to capture image information of a local area. The camera system sends the image information to a processing server, which generates 3D-360 degree content of the local area from the image information. The 3D-360 degree content is media content associated with a 360-degree field of view of the camera system and which may be rendered in 3D, e.g., an image, a video, audio information, or some combination thereof.

Embodiments according to the invention are in particular disclosed in the attached claims. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

According to the invention, a camera system comprises:
a plurality of peripheral cameras, the peripheral cameras arranged in a ring configuration around a center point such that an optical axis of each camera is within a plane and a field of view of each camera faces away from the center point, and that outside of a threshold distance any object in a portion of a local area is within a field of view of at least two peripheral cameras;
at least one axis camera positioned such that an optical axis of the at least one axis camera is along an alignment axis that runs through the center point;
a first rigid plate positioned along the alignment axis such that the alignment axis bisects a center of the first plate, the first rigid plate including a first top surface and a first bottom surface, the first top surface coupled to a first mounting surface of the at least one axis camera, the first bottom surface coupled to first mounting surfaces of the plurality of peripheral cameras; and
a second rigid plate positioned along the alignment axis such that the alignment axis bisects the center of the second plate, the second rigid plate including a second top surface coupled to second mounting surfaces of the plurality of peripheral cameras.

The first plate and the second plate may be disk-shaped.

The camera system comprises a bottom axis camera that is positioned such that an optical axis of the bottom axis camera is along the alignment axis that runs through the center point, and the center point is between the top axis camera and the bottom axis camera.

The second plate includes a second bottom surface, and the camera system may comprise:
a support structure that is coupled to the second bottom surface, the support structure configured to support the camera system.

In an embodiment according to the invention, the camera system may comprise:
a camera controller configured to:
instruct the camera system to generate image information of the local area,
provide the image information to a processing server, wherein the processing server generates content using the image information, and the generated content includes a 3 dimensional (3D) portion and a plurality of two-dimensional (2D) portions, the 3D portion corresponding to portions of the content generated using image information from the peripheral cameras and the 2D portion corresponding to portions of the content generated using image information from the at least one axis camera.

The camera system may comprise a plurality of axis cameras that include a first group of cameras positioned such that their respective optical axes are between the plane and the alignment axis, the first group of cameras having a total field of view that encompasses a second portion of the local area, and that outside of a second threshold distance any object in the second portion of the local area is within a field of view of at least two axis cameras in the first group of cameras.

The at least one axis camera may have a field of view that is larger than a field of view of each of the peripheral cameras.

### BRIEF DESCRIPTION OF THE DRAWINGS

- FIG. 1: is a high-level block diagram illustrating an embodiment of a system for generating 3D-360 degree images for a virtual reality system, according to an embodiment.
- FIG. 2A: illustrates a perspective view of a camera assembly for capturing image information, according to an embodiment.
- FIG. 2B: illustrates a top-down view of the camera assembly shown in FIG. 2, according to an embodiment.
- FIG. 2C: illustrates a side view of the camera assembly shown in FIG. 2, according to an embodiment.
- FIG. 2D: illustrates a side view of a camera assembly for capturing image information, according to one embodiment.
- FIG. 3: is a high-level block diagram illustrating a detailed view of modules within a camera system, according to one embodiment.
- FIG. 4: illustrates 3D-360 degree content generated from image information, according to one embodiment.
- FIG. 5: illustrates a user interface for a camera system, according to one embodiment.

The figures depict embodiments of the present disclosure for purposes of illustration only. One skilled in the art will readily recognize from the following description that alternative embodiments of the structures and methods illustrated herein may be employed without departing from the principles, or benefits touted, of the disclosure described herein.

### DETAILED DESCRIPTION

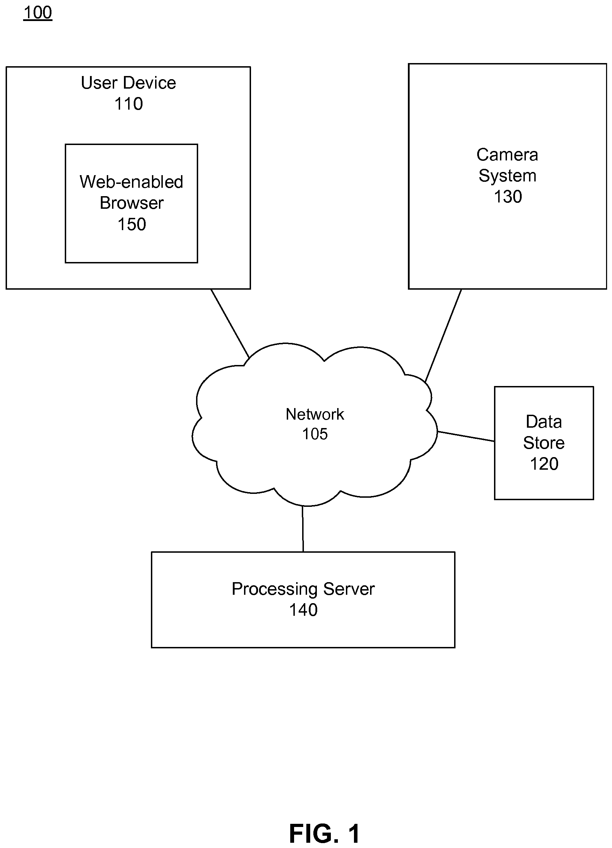

FIG. 1 is a high-level block diagram illustrating an embodiment of a system 100 for generating 3D-360 degree images for a virtual reality system, according to an embodiment. The system 100 includes a network 105 that connects a user device 110 to a data store 120, a camera system 130, and a processing server 140. In the embodiment of FIG. 1, only one user device 110 is illustrated, but there may be multiple instances of this entity. For example, there may multiple user devices 110 coupled, via the network 105, to the data store 120, the camera system 130, and the processing server 140.

The network 105 provides a communication infrastructure between the user devices 110, the data store 120, the camera system 130, and the processing server 140. The network 105 is typically the Internet, but may be any network, including but not limited to a Local Area Network (LAN), a Metropolitan Area Network (MAN), a Wide Area Network (WAN), a mobile wired or wireless network, a private network, or a virtual private network.

The user device 110 is a computing device that executes computer program modules-e.g., a web-enabled browser 150 or some other client application-which allow a user to view a user interface for the camera system 130. A user device 110 might be, for example, a personal computer, a tablet computer, a smart phone, a laptop computer, or other type of network-capable device.

The data store 120 stores image information from the camera system 130 and the processing server 140. In some embodiments, the data store 120 can be cloud-based and is accessed by the camera system 130 and the processing server 140 via the network 105. The data store 120 may receive and store image information directly from the camera system 130, or the data store 120 may receive and store image information from the processing server 140 after the image information has been processed. In one embodiment, the data store 120 is a part of the processing server 140. In another embodiment, the data store 120 is an archive maintained by a third-party storage provider.

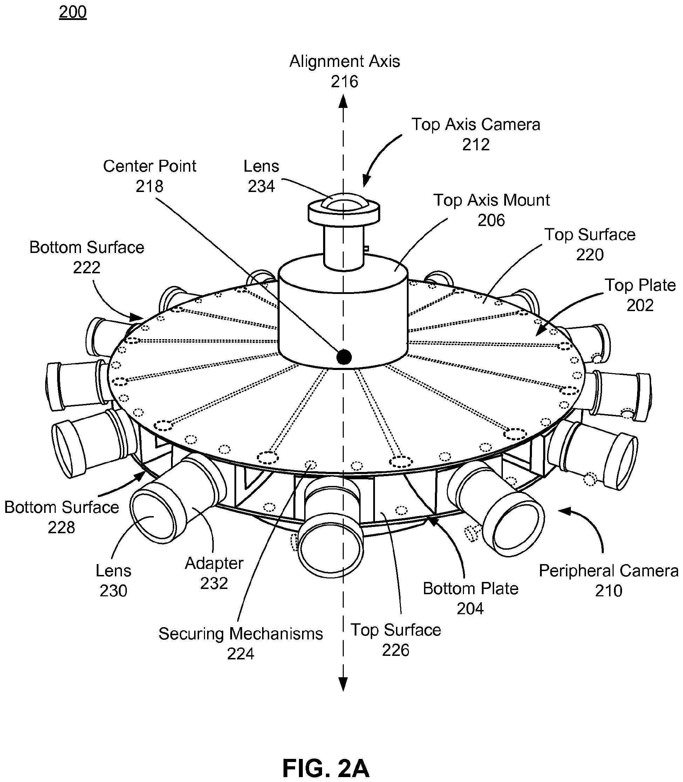

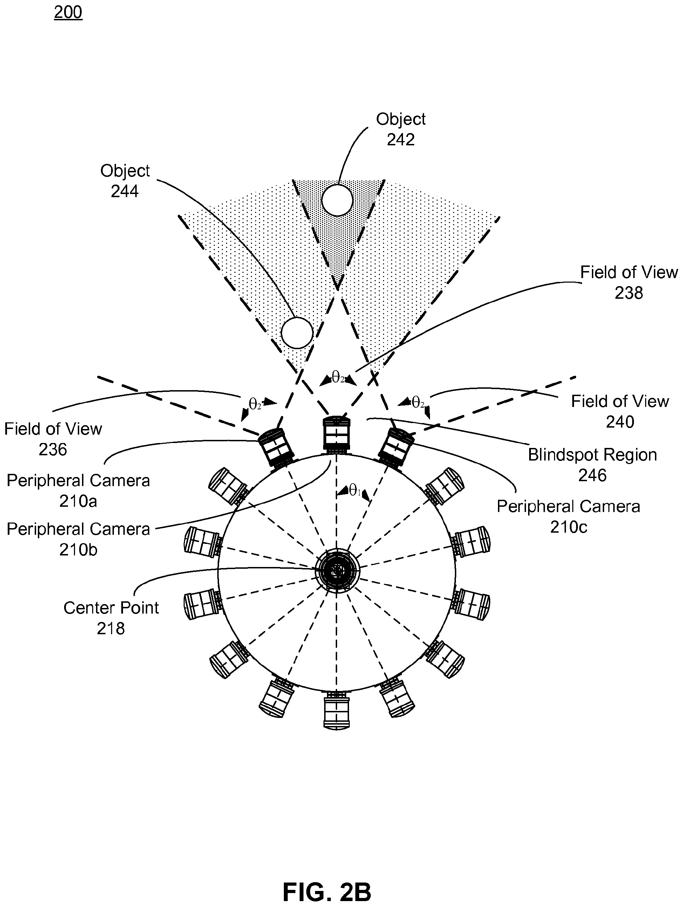

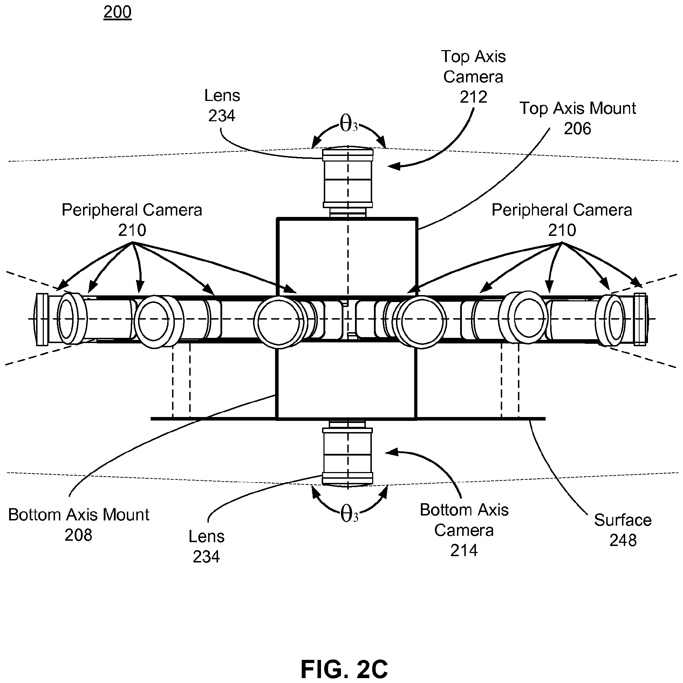

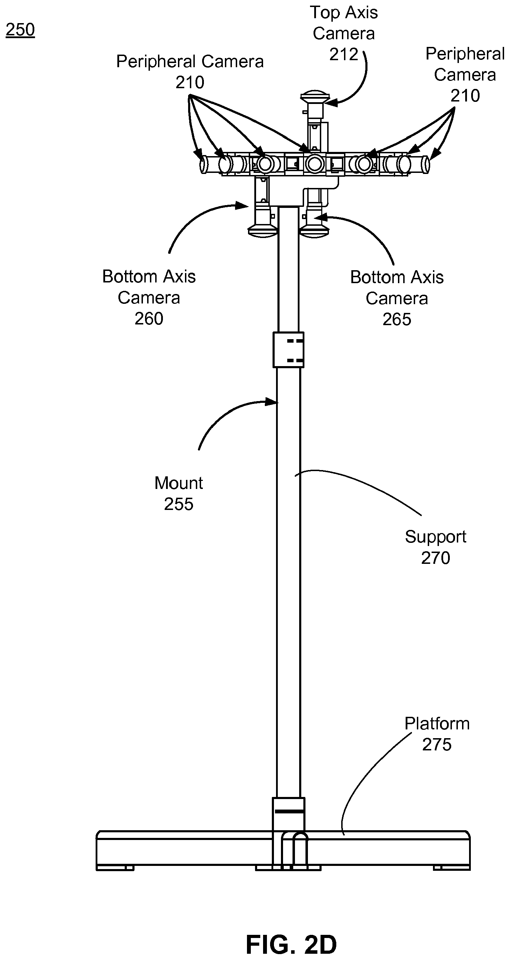

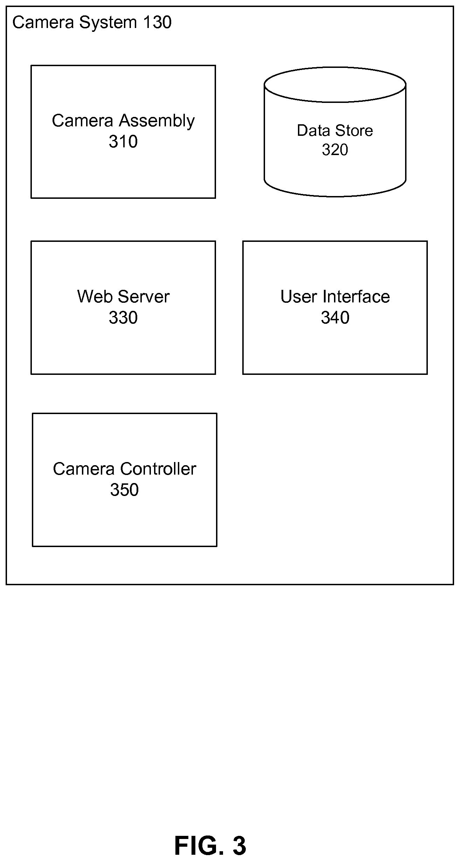

The camera system 130 generates image information using captured images and/or audio information of a local area surrounding the camera system 130. The camera system 130 comprises an assembly of cameras positioned to capture a 360 degree view of the local area. In the embodiment of FIG. 1, the assembly includes a plurality of cameras mounted to a rigid surface or structure. At least a portion of the plurality of cameras are arranged such that adjacent cameras may produce stereo images of the local area. Embodiments of the camera system 130 are discussed in detail below with regard to FIGs. 2A, 2B, 2C, 2D, and 3.

The local area is the environment that surrounds the camera system 130. For example, the local area may be a room that the camera system 130 is inside, or the camera system 130 may be outside and the local area is an outside area that is visible to the camera system 130. Image information is information output by the camera system 130. Image information may include, e.g., one or more images, audio information (e.g., sounds captured by one or more microphones), video information, metadata, or some combination thereof. Metadata is additional information associated with the image information. Metadata may include, e.g., frame rate, exposure settings (e.g., shutter speed, gain, etc.), copyright information, date/time information, camera identifier, names, labeling, some other information associated with the image information, or some combination thereof. The camera system 130 includes memory storage that buffers and stores the image information. In some embodiments, the camera system 130 may be locally coupled to (e.g., via some wired and/or wireless connection) an external data store. In some embodiments, the camera system 130 is configured to send the image information to the processing server 140 via the network 105. In alternate embodiments, the camera system 130 is configured to process the image information to form 3D-360 degree content at a high resolution. For example, 3D-360 degree content video content may be at, e.g., 4K, 6K, 8K resolution, or some other resolution supported by the camera system 130.

The camera system 130 receives instructions from a user to capture image information of the local area. For example, the camera system 130 can include a web server that allows users to control the camera system 130 using, e.g., the web-enabled browser 150 on the user device 110 via the network 105. The camera system 130 determines a global exposure setting (e.g., gain, shutter speed, aperture) using information from one or more cameras in the camera assembly 130, and applies the global exposure setting to all of the cameras in the camera system 130. Accordingly, each camera, regardless of a light metering specific to that camera, uses the global exposure settings. The camera system 130 synchronizes the capture of the image information using a global shutter that causes all of the cameras in the camera system 130 to take an exposure (using the global exposure setting) at the same time. Accordingly, both exposure and time a frame is taken is consistent across all of the image information.

The processing server 140 generates 3D-360 degree content using image information. 3D-360 degree content is media content associated with a 360 degree field of view of the camera system 130 and at least a portion of which includes depth information and may be rendered in three dimensions (3D). 3D-360 degree content may include, e.g., an image, a video, audio information, or some combination thereof. The processing server 140 may generate the 3D-360 degree content in high resolution. For example, 3D-360 degree content video content may be at, e.g., 4K, 6K, 8K resolution, or some other resolution supported by the camera system 130. For example, 3D-360 degree content may be a video of the local area, the video being a merged representation of the images taken by the camera system 130, and which renders in 3D portions of the video corresponding to images taken by the peripheral cameras.

The processing server 140 receives the image information from the camera system 130, the data store 120, or some combination thereof. The processing server 140 is configured to create 3D-360 degree content with an algorithm performed by a set of computer-implemented instructions. The algorithm identifies a set of images in the image information associated with a same time value (e.g., metadata indicates captured at the same time), and merges the images into a single frame of 3D-360 degree content. Additionally, the processing server 140 may generate video files by coupling together multiple frames of 3D-360 degree content associated with different times. The 3D-360 degree content is output by the processing server 140 and can be stored in the data store 120 for access at a later time.

The system 100 beneficially allows a user to capture image information of a local area and construct 3D-360 degree content of the local area that may be used in, e.g., a virtual reality (VR) environment, or some other environment (e.g., augmented reality and/or mixed reality). The system 100 has a rigid structure, a synchronous operation, and a web-based interface. The rigidity of the camera system 130 prevents the plurality of cameras from moving with respect to each other once each camera has been aligned and calibrated, making it easier to process the image information and fuse the images together to construct the 3D-360 degree content. The synchronicity of the plurality of cameras allows for global settings to be applied to each camera and improves the quality of the image information captured, which, in turn, improves the quality of the 3D-360 degree content that is constructed. The web-based interface provides ease-of-use for a user to set up the system 100, preview captured image information, apply global settings, process image information, and access, use, or store 3D-360 degree content.

FIG. 2A illustrates a perspective view of a camera assembly 200 for capturing image information, according to one embodiment. In some embodiments, the camera assembly 200 is an embodiment of the camera assembly 130 in system 100. Alternatively, the camera assembly 200 may be part of some other system. Some embodiments of the camera assembly 200 have different components than those described here. Similarly, in some cases, functions can be distributed among the components in a different manner than is described here.

As described in greater detail below, the camera assembly 200 generates image information using captured images and/or audio information of a local area. The camera assembly 200 includes a top plate 202, a bottom plate 204, a top axis mount 206, a bottom axis mount 208 (not shown), a plurality of peripheral cameras 210, and a plurality of axis cameras including a top axis camera 212 and a bottom axis camera 214 (not shown). The top plate 202, the bottom plate 204, the top axis mount 206, the bottom axis mount 208 (not shown), the top axis camera 212, and the bottom axis camera 214 (not shown) are aligned along an alignment axis 216. The plurality of peripheral cameras 210 are arranged such that they form a ring around a center point 218 that is bisected by the alignment axis 216. The top plate 202 couples to a top surface of the ring of peripheral cameras 210, and the bottom plate 204 couples to a bottom surface of the ring of peripheral cameras 210. This configuration creates a rigid structure that prevents vibration and overheating of the peripheral cameras 210 and allows the peripheral cameras 210 to capture quality images and/or video that are used to generate the portion of 3D content in the 3D-360 degree content.

The top plate 202 is configured to secure the plurality of peripheral cameras 210 and one or more axis cameras (e.g., top axis camera 212). The top plate 202 includes a top surface 220, a bottom surface 222, and a plurality of securing mechanisms 224. The top plate 202 is composed of a rigid material and is substantially disk-shaped. The rigid material may be, e.g., a metal (e.g., aluminum, steel, etc.), a rigid plastic, some other rigid material, or some combination thereof. The top surface 220 couples a top axis mount 206 to the top plate 202, such that the top axis mount 206 is centered along the alignment axis 216. Along the periphery of the top plate 202 are the plurality of securing mechanisms 224. Each securing mechanism 224 is configured to secure a peripheral camera 210 to the bottom surface 222 of the top plate 202. For example, the securing mechanisms 224 may be mechanical fasteners (e.g. screws, bolts) that couple the top plate 202 to the plurality of peripheral cameras 210.

The bottom plate 204 is configured to secure the plurality of peripheral cameras 210 and one or more axis cameras (e.g. bottom axis camera 214) and is substantially similar to the top plate 202. The bottom axis camera 214 is not shown in FIG. 2A but is illustrated as axis camera 214 in FIG. 2C. The bottom plate 204 includes a top surface 226, a bottom surface 228, and a plurality of securing mechanisms 224. The bottom plate 204 is composed of a rigid material and is substantially disk-shaped. The rigid material may be, e.g., a metal (e.g., aluminum, steel, etc.), a rigid plastic, some other rigid material, or some combination thereof. The bottom surface 228 is configured to couple a bottom axis mount 208 (not shown in FIG. 2A) to the bottom plate 204, such that a bottom axis mount 208 is centered along the alignment axis 216. Along the periphery of the bottom plate 204 are an additional plurality of securing mechanisms 224, wherein each securing mechanism 224 secures a peripheral camera 210 to the top surface 226 of the bottom plate 204. The bottom surface 228 is further configured to couple to a support structure that provides standing or mounting support and stability for the camera system 130. The support structure can be a variety of mounts (e.g. monopod, tripod, quadrantpod, wall mount, etc.).

The axis mounts are configured to secure an axis camera (e.g. top axis camera 212 or bottom axis camera 214) perpendicular to a surface of the top plate 202 or the bottom plate 204. The axis mounts are substantially cylindrical and hollow within. This configuration allows an axis camera to be vertically offset from the surface of the top plate 202 or the bottom plate 204, allowing for less overlap of the field of views of the axis cameras 212, 214 and the peripheral cameras 210. Wires connecting to the axis cameras may be hidden within the hollow portion of the axis mounts. In the embodiment of FIG. 2A, the top axis mount 206 is coupled to the top surface 220 of the top plate 202, and the bottom axis mount 208 is coupled to the bottom surface 214 of the bottom plate 210. Each axis mount is aligned along the alignment axis 216 and provides stability for an axis camera.

The peripheral cameras 210 are configured to capture images and/or video of a 360 degree view of the local area. The peripheral cameras 210 are positioned such that they form a ring around the center point 218 that is bisected by the alignment axis 216. The plurality of peripheral cameras 210 are positioned around the center point 218 such that an optical axis of each peripheral camera 210 is within a plane, and a field of view of each peripheral camera 210 faces away from the center point 218. Each peripheral camera 210 is positioned next to the adjacent peripheral camera 210 at a certain distance and at a certain angle. This configuration allows the captured images and/or video, once processed into 3D-360 content to include stereoscopic (also referred to as stereo) portions. In some embodiments, the distance simulates an inter-pupillary distance between the human eyes. The simulated inter-pupillary distance is dependent on the amount of overlap between horizontal fields of view of adjacent peripheral cameras 210. The amount of overlap is a function of the horizontal field of view of each peripheral camera 210 after correcting for barrel distortion and of the angular spacing or number of peripheral cameras 210 in the ring configuration. For example, an embodiment that simulates greater than 6.4cm inter-pupillary distance (which is approximately the median value for inter-pupillary distance of humans) consists of fourteen peripheral cameras evenly spaced, each with horizontal field of view greater than or equal to 77 degrees after correcting for barrel distortion. This configuration allows the captured images and/or video to simulate a human's perception of vision. The number of peripheral cameras 210 may vary and can depend on the size of the top plate 202 and the bottom plate 204, and/or a field of view of each of the peripheral cameras 210. In the embodiment of FIG. 2A, there are fourteen peripheral cameras 210 which form the ring and capture a 360 degree view of the environment. In other embodiments, there may be more or less peripheral cameras 210.

A peripheral camera 210 includes a sensor (not shown), a lens 230, and a camera controller (not shown). The sensor is an electrical device that captures light using an array of photo-sensitive pixels, wherein each pixel converts light into an electronic signal. Sensors can have varying features, such as resolution, pixel size and sensitivity, light sensitivity, type of shutter, and type of signal processing. The lens 230 is one or more optical elements of a camera that facilitate focusing light on to the sensor. Lenses have features that can be fixed or variable, such as the focus and the aperture, may have varying focal lengths, and may be covered with an optical coating. Some embodiments may have lenses that are interchangeable, such that a first lens can be removed from the camera and a second lens can be coupled to the camera. In some embodiments, the peripheral camera 210 may have a microphone to capture audio information. The microphone can be located within the camera or may located external to the camera.

The camera controller is able to determine exposure settings (e.g. aperture, gain, shutter) for the camera based on light incident on the sensor. In some embodiments, the camera controller acts as a principal camera, i.e. the camera controller controls a plurality of other cameras. In other embodiments, the camera controller acts as an ancillary camera, i.e. the camera controller is controlled by a second camera. The embodiments in which the peripheral cameras 210 act as ancillary cameras, the shutter and exposure settings are set globally by a principal camera. In the embodiment of FIG. 2A, the peripheral camera 210 includes several properties, such as a small form factor, high resolution (e.g., 2048x2048), a high frame rate (e.g., 90 frames per second), a 25.4 mm (1") sensor, and a C-mount for a lens. A field of view ranging from ∼ 50 to 120 degrees is generally referred to as a wide field of view, and a field of view larger than 120 degrees is generally referred to as a fish eye field of view. The field of view of each peripheral camera 210 can range from a wide angle to a fish eye field of view. For example, the field of view of each peripheral camera 210 may range between 50-180 degrees. In the embodiment of FIG. 2A, the lens 230 has an optical coating that blocks infrared light, a f/2.4 aperture, a CS-mount for a camera, and a horizontal and vertical field of view of 92 degrees. The effective field of view of the lens 230 is 77 degrees after correction for barrel distortion. In other embodiments, each of the peripheral cameras 210 may have a different field of view. For example, each of the peripheral cameras 210 may have a 180 degree field of view (i.e., a fish eye lens). Extremely wide fields (i.e., fish eye) of views have the potential to reduce the number of peripheral cameras used to generate stereoscopic portions of the 3D-360 degree content, however, processing of the image information becomes more difficult as the image information tends to include larger amounts of distortion.

An adapter 232 allows for the use of off-the-shelf components in the camera assembly 200. The adapter 232 is configured to couple the peripheral camera 210 to the lens 230 by securing to the C-mount of the peripheral camera 210 at a first end and securing to the CS-mount of the lens 230 at a second end.

Each peripheral camera 210 further includes a plurality of securing mechanisms to secure the peripheral camera 210 between the top plate 202 and the bottom plate 204. The securing mechanisms are reciprocal to the securing mechanisms 224, allowing the peripheral camera 210 to couple to the bottom surface 222 of the top plate 202 and to couple to the top surface 220 of the bottom plate 204. In the embodiment of FIG. 2A, each of the peripheral cameras 210 is positioned such that the lens 230 points radially outward from the center point 218. The peripheral cameras 210 may be battery-powered, powered via cables and a cable interface (e.g. a universal serial bus (USB) interface), or some combination thereof. Additionally, some embodiments may have support structures mounted between the top plate 202 and the bottom plate 204 to increase rigidity and stability of the camera assembly 200. The support structures may be posts, support blocks, or some combination thereof.

The plurality of axis cameras are configured to capture images and/or video of top and bottom views of the local area. The axis cameras include a top axis camera 212 and a bottom axis camera 214 (shown in FIG. 2C) that are secured to their respective axis mounts 206, 208 and positioned such that both the top axis camera 212 and the bottom axis camera 214 are aligned along the alignment axis 216 such that an optical axis of each axis camera 212, 214 is collinear with the alignment axis 216. The field of view of the top axis camera 212 and the field of view of the bottom axis camera 214 are directed away from the center point 218 of the camera assembly 200.

The top axis camera 212 provides a top view of a portion of the local area, while a bottom axis camera 214 (as illustrated in FIG. 2C) provides a bottom view of a different portion of the local area. As previously described, the top and bottom axis cameras 212, 214 are vertically offset relative to the peripheral cameras 210 to limit the overlap between the fields of view. The number and orientation of axis cameras may vary. In the embodiment of FIG. 2A, there are two axis cameras which capture a top and bottom view of the local area. In alternate embodiments (e.g., as discussed in relation to FIG. 2D), the camera assembly 200 includes two bottom axis cameras, which are arranged such that the field of view of the first bottom axis camera and the field of view of the second bottom axis camera have sufficient overlap to remove the mount that supports the camera assembly 200 as an occlusion in the 3D-360 degree content. In other embodiments, the top plate 202 and the bottom plate 204 may each secure a plurality of axis cameras, such that the arrangement of the axis cameras covers a hemisphere and provides a spherical field of view.

An axis camera includes a sensor (not shown), a lens 234, and a camera controller (not shown). The sensor is an electrical device that captures light using an array of photo-sensitive pixels, wherein each pixel converts light into an electronic signal. Sensors can have varying features, such as resolution, pixel size and sensitivity, light sensitivity, type of shutter, and type of signal processing. The lens 234 includes one or more optical elements of a camera that facilitates focusing light on the sensor. Lenses have features that can be fixed or variable, such as the focus and the aperture, may have varying focal lengths, and may be covered with an optical coating. Some embodiments may have lenses that are interchangeable, such that a first lens can be removed from the camera and a second lens can be coupled to the camera. In some embodiments, the axis cameras may have a microphone to capture audio information. The microphone can be located within the camera or may be located external to the camera.

The camera controller is able to determine exposure settings (e.g. aperture, gain, shutter) for the camera and controls the frame rate. In some embodiments, the camera controller acts as a principal camera, i.e. the camera controller controls a plurality of other cameras. In other embodiments, the camera controller acts as an ancillary camera, i.e. the camera controller is controlled by a second camera. The embodiments in which the axis cameras act as ancillary cameras, the shutter and exposure settings are set globally by a principal camera. In the embodiment of FIG. 2A, the axis cameras include several properties, such as a small form factor, high resolution (e.g. 2048x2048), a high frame rate (e.g., 90 frames per second), a 1" sensor, and a C-mount for a lens. The field of view (FOV) of each axis camera can range between 120-185 degrees. In alternate embodiments, the FOV of the axis cameras could also be less than 120 or greater than 185. At minimum, it must be large enough to cover the holes left by the peripheral cameras 210. For example if a peripheral camera 210 has vertical FOV x degrees, in order to image the holes in coverage, the axis cameras should have a FOV of 2*(90 - x) degree. In some embodiments, a larger FOV may be used to ensure sufficient overlap to enable a smooth transition in the 3D-360 degree content from a portion corresponding to image information from the axis cameras to a portion corresponding to image information from the peripheral cameras 210.

In the embodiment of FIG. 2A, a lens 234 has an optical coating that blocks infrared light, a f/1.8 - 16 aperture, a C-mount for a camera, and a horizontal and vertical field of view of 185 degrees. The axis cameras may be battery-powered, powered via cables and a cable interface (e.g. a USB interface), or some combination thereof.

The camera assembly 200 captures image information using the plurality of peripheral cameras 210 and axis cameras that are positioned to view 360 degrees of a local area. The settings of the camera assembly 200 can be previewed and modified remotely by a user. The image information can be sent to the data store 120 or to the processing server 140 to generate 3D-360 degree content.

FIG. 2B illustrates a top-down view of the camera assembly 200 shown in FIG. 2, according to an embodiment. FIG. 2B demonstrates the configuration of the peripheral cameras 210 and highlights a field of view 236, field of view 238, and a field of view 240, as seen by three peripheral cameras 210a, 210b, and 210c, respectively. An object 242 and an object 244 in the local area are viewed by the peripheral cameras 210a, 210b, and 210c. The illustration in FIG. 2B is used for reference and may not be illustrated to scale.

As described with regards to FIG. 2A, the peripheral cameras 210 are arranged such that they create a ring around the center point 218, with the lens 230 pointing outwards from the center point 218 bisected by the alignment axis 216. Each peripheral camera 210 is separated from any adjacent peripheral camera 210 by a spacing distance. The spacing distance is the distance between sensors of adjacent peripheral cameras 210. In some embodiments, the spacing distance is approximately the same as an inter-pupillary distance of human eyes. This configuration allows the captured images and/or video to simulate how a human would perceive the imaged portions of the local area.

The peripheral cameras 210 are positioned in a ring configuration; accordingly, each camera is at a slight angle, θ₁, relative to adjacent cameras. For example, in some embodiments, the angle θ₁ is 25.71 degrees, which allows for significant overlap between the fields of view of the peripheral cameras 210. The angle, θ₁, and the field of views of each peripheral camera 210 are configured such that an object in the local area imaged by the peripheral cameras 210 can be seen by at least two peripheral cameras 210. As illustrated in FIG. 2B, the fields of view 236, 238, 240 for the peripheral cameras 210a, 210b, 210c, respectively, begin to overlap at a threshold distance; the overlapping fields of view are represented by the shaded regions. In the embodiment of FIG. 2B, each peripheral camera 210 has a field of view of θ₂, which is 77 degrees. The regions between the fields of view 236, 238, 240 are a blindspot region 246 in which the objects are not viewed by any peripheral camera 210.

The threshold distance is the distance at which objects in the local area can be viewed by at least two peripheral cameras 210. The threshold distance varies throughout the local area, depending on the size of θ₁. For example, an object 242 is at a first distance from the center point 218 and can be viewed by three peripheral cameras 210a, 210b, and 210c; however, an object 244 is located at a second distance that is less than the first distance and is within the field of view of both the peripheral camera 210a and the peripheral camera 210b. The peripheral cameras 210 and the axis cameras are positioned such that every object in the environment past a threshold distance can be viewed by at least two peripheral cameras 210. This configuration allows the camera assembly 200 to view objects in the local area from multiple angles and to capture image information with significant overlap, enabling the system 100 to reconstruct high quality 3D-360 degree images and/or video.

FIG. 2C illustrates a side view of the camera assembly 200 shown in FIG. 2, according to an embodiment. As described with regards to the embodiment of FIG. 2A, the lens 234 is a fisheye lens that has a wide angle θ₃ field of view. In the embodiment of FIG. 2C, the angle θ₃ is 185 degrees, which can vary in other embodiments. The lenses 234 are configured to have wide coverage of the top and bottom areas of an environment and provide sufficient overlap with the fields of view of the peripheral cameras 210, such that a high quality 3D-360 degree image can be created. In some embodiments, a surface 248 can be a support structure for the camera assembly 200 to rest on a table or to couple to a camera mount or stand.

FIG. 2D illustrates a side view of a camera assembly 250 for capturing image information, according to one embodiment. In some embodiments, the camera assembly 250 is an embodiment of the camera assembly 130 in system 100. Alternatively, the camera assembly 250 may be part of some other system. Some embodiments of the camera assembly 250 have different components than those described here. Similarly, in some cases, functions can be distributed among the components in a different manner than is described here.

The camera assembly 250 is substantially the same as the camera assembly 200, except that the camera assembly 250 includes a mount 255 and two bottom axis cameras 260, 265. The mount 255 supports the camera assembly 250. The mount 255 includes a support 270 and a platform 275. The support 270 transfers the load of the camera assembly 250 to the platform 275 in a stable manner (i.e., minimal vibration). In this embodiment, the support 270 is a single rod that couples the platform 275 to the camera assembly 250. In other embodiments, the support 270 may include a plurality of rods, or other means of support from the platform 275 to the camera assembly 250. The support 275 may be composed of, e.g., wood, metal, plastic, etc.

The platform 275 is a stable foundation for the support 270 and the camera system 250. In this embodiment, the platform 275 is simply three legs spaced apart from each other. The platform 275 may be composed of, e.g., wood, metal, plastic, etc. Note, in alternate embodiments, other mounts may be used.

The bottom axis cameras 255, 260 are substantially the same as the bottom axis camera 214. The bottom axis cameras 255, 260 are arranged such that a field of view of the bottom axis camera 255 and a field of view of the bottom axis camera 260 have sufficient overlap to remove some or all of the mount 265 (e.g., portions of the support 270) as an occlusion in the 3D-360 degree content.

FIG. 3 is a high-level block diagram illustrating a detailed view of modules within the camera system 130, according to one embodiment. Some embodiments of the camera system 130 have different modules than those described here. Similarly, the functions can be distributed among the modules in a different manner than is described here. The camera system 130 is comprised of modules including a camera assembly 310, a data store 320, a web server 330, a user interface 340, and a camera controller 350.

The camera assembly 310 captures image information using a plurality of cameras that are positioned to view 360 degrees of a local area. In some embodiments, the camera assembly 310 is an embodiment of the camera assembly 200. Alternatively, the camera assembly 310 may be some other camera assembly configured to capture a plurality of images that cover 360 degrees and at least a portion of which is captured in stereo. The image information may include, e.g., one or more images, audio information, video information, metadata, or some combination thereof. The image information can be captured in various file formats for images (e.g. .jpeg, .tif, .png, etc.), audio (e.g..aac, .mp3, .wav, etc.), and/or video (e.g..mpg, .mov, .wmv, etc.). The camera assembly 310 captures the image information responsive to instructions from the camera controller 350. In some embodiments, the camera assembly 310 ensures that the image information captured from each peripheral camera 210 and axis camera is consistent and allows for the construction of uniform, natural-looking 3D-360 degree content. The camera assembly 310 captures and sends some or all of the image information to, e.g., the user interface 340, the data store 320, the processing server 130, the data store 120, or some combination thereof.

The data store 320 of the camera system 130 is a local memory storage that stores image information. The data store 320 receives and stores the image information from the camera assembly 310. In some embodiments, the data store 320 may upload image information to, e.g., an external data store (e.g., data store 120), a processing server (e.g., processing server 130), or some combination thereof. In some embodiments, the data store 320 acts as a buffer. For example, the camera system 130 may generate image information at a rate that exceeds an upload rate to an external data store and/or a processing server. Accordingly, the data store 320 may temporarily buffer the image information to ensure that the upload rate does not exceed to the external data store and/or a processing server.

The web server 330 serves as a network 105 interface of the camera system 130. The web server 330 transfers data from the camera assembly 310 through the network 105 to the user device 110, the processing server 140, some other entity, or some combination thereof. In some cases, the camera assembly 310 may transfer data to the web server 330 using a wired interface (e.g., USB). The data can be compressed or uncompressed.

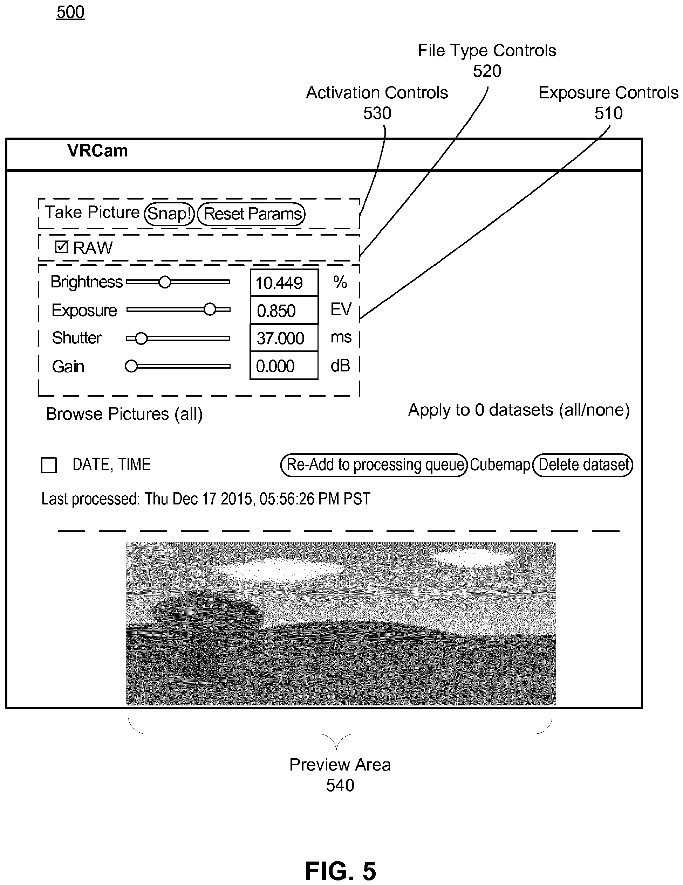

The user interface 340 allows a user to interface with the camera system 130. In some embodiments, the user interface 340 is a graphical user interface (GUI). An example user interface is described in detail below with regard to FIG. 5. The user interface 340 allows a user to preview data captured by the camera assembly 310 and to control the settings of the camera assembly 310. In some embodiments, the user interface 340 may be accessed through a network connection on a mobile phone, tablet, PC, etc. or any other device that has a network connection. In alternate embodiments, the user interface 340 may include a display and one or more input/output devices (e.g., mouse keyboard) that are directly coupled to the camera assembly 310.

The camera controller 350 is configured to control the operation of the camera assembly 310. In the embodiment of FIG. 3, the camera assembly 310 is configured to have one camera act as a principal camera, and the additional cameras act as ancillary cameras. The principal camera is the camera in which the camera controller acts as the master of a plurality of other cameras. The ancillary camera is the camera in which the camera controller acts as the slave to the master camera. The principal camera may be any peripheral camera 210 or axis camera; in the embodiment of FIG. 3, the principal camera is the top axis camera 212 coupled to the top plate 202. The camera controller 350 controls exposure settings for cameras in the camera assembly 310. The exposure of a camera determines how light or dark an image will appear when captured by a camera. The exposure settings may include, e.g., aperture size, shutter speed, gain, or some combination thereof. The aperture size controls the amount of light that reaches the sensor. The shutter speed is the length of time that the sensor is exposed to light. The gain is the sensitivity of the sensor to the light. In some embodiments, the camera controller 350 instructs the camera assembly 310 to determine exposure settings for each of the cameras in the camera assembly 310. The camera controller 350 determines a global exposure setting using the determined exposure settings, and provides the global exposure setting to all of the cameras in the camera assembly 310. A global exposure setting is a single exposure setting that is applied to all of the cameras in the camera assembly 310. In alternate embodiments, the camera controller 350 instructs the principal camera to determine its exposure setting, and then sets the determined exposure setting as a global exposure setting and provides the global exposure setting to all of the cameras in the camera assembly 310. A global exposure setting provides for uniform exposure across all of the plurality of peripheral cameras 210 and axis cameras. Without a global exposure setting, each camera in the camera assembly 310 may capture image information at different exposure settings, causing some images to appear lighter or darker than other images. This may create inconsistencies between individual images when the images are stitched together to construct the 3D-360 degree content. Uniform exposure assists in creating natural looking images and/or video in 3D-360 degree content.

The camera controller 350 controls a global shutter of the camera assembly 310. A global shutter links the shutter of each camera in the camera assembly 310, such that each shutter opens at the same time (i.e. within less than 1 millisecond of one another), allowing the camera assembly 310 to capture synchronous image information. The camera controller 350 may instruct a principal camera to provide a master trigger signal to the ancillary cameras in the camera assembly 310. The master trigger signal commands the shutter of each ancillary camera to open at the same time as the shutter of the principal camera. The peripheral cameras 210 and the axis cameras within the camera assembly 310 may be connected with generator locking cables (e.g. USB 3.0 generator locking cables) to ensure that data is captured synchronously. Capturing synchronous image information ensures that individual images match and can be accurately stitched together by the processing server 140 to construct the 3D-360 degree content.

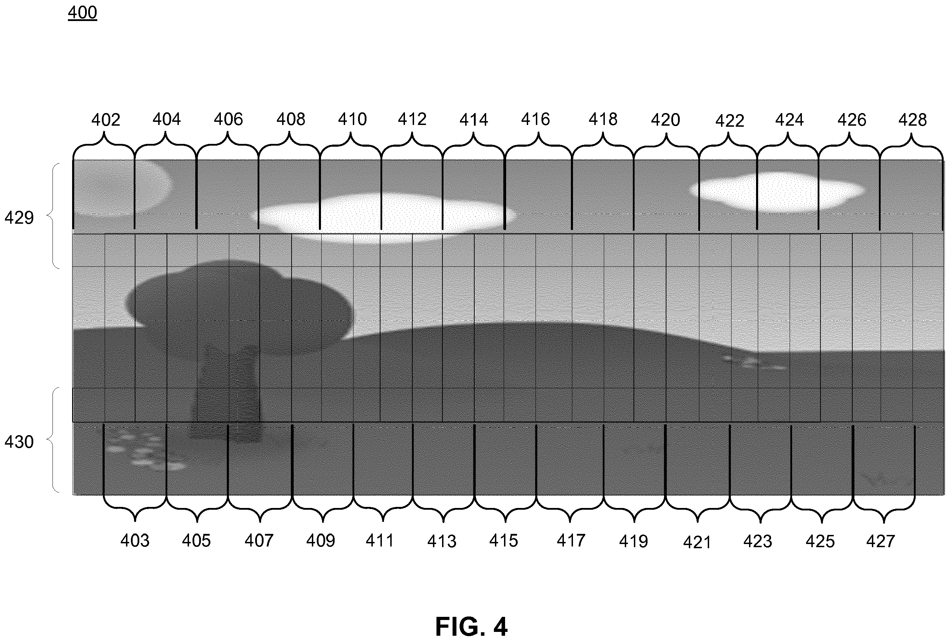

FIG. 4 illustrates 3D-360 degree content generated from image information, according to one embodiment. In the embodiment of FIG. 4, the 3D-360 degree content is a constructed image 400 that was generated using individual image frames 402-430. The individual image frames 402-430 were processed by the processing server 140 and constructed to form a 360 degree image that is in 3D for portions of the image generated from frames 402-430.

The frames 402-428 were captured by the plurality of peripheral cameras 210, wherein an individual frame is captured by one peripheral camera 210. Each frame 402-428 includes a two-dimensional (2D) portion of the local area. Combining images that capture a local area from multiple 2D perspectives into a single image allow the objects within the image to appear 3D. When individual frames captured by a camera assembly with a 360 degree view of a local area, such as frames 402-428, are combined, it results in the constructed image 400 that illustrates a 3D-360 degree view of the local area. Each frame 402-430 includes a region where it overlaps with respective adjacent frames, as illustrated in FIG. 4. The overlapping regions of the frames 402-428 result from the overlap of the fields of view of the peripheral cameras 210, as described with regards to FIG. 2B. The overlapping regions allow the processing server 140 to seamlessly and accurately construct the frames 402-428 into a 360 degree image for a virtual reality system.

Similarly, the frames 429 and 430 are captured by the plurality of axis cameras, wherein an individual frame is captured by one axis camera. In the embodiment of FIG. 4, frame 429 is captured by the top axis camera 212, and frame 430 is captured by the bottom axis camera 214. Each frame 429 and 430 includes a region where it overlaps with the frames 402-428 captured by the peripheral cameras 210, providing the top and bottom views of the local area. The overlapping regions of the frames 429 and 430 result from the overlap of the fields of view of the axis cameras with the peripheral cameras 210. The overlapping regions allow the processing server 140 to seamlessly and accurately combine the frames 429 and 430 with the frames 402-428 into a 360 degree image for a virtual reality system.

Furthermore, in the embodiment of FIG. 4, each frame 402-430 includes metadata that allows the processing server 140 to create the constructed image 400 from the individual frames 402-430. As described with regards to FIG. 1, metadata may include, e.g., frame rate, exposure settings (e.g., shutter speed, gain, etc.), copyright information, date/time information, camera identifier, names, labeling, some other information associated with the image information, or some combination thereof. For example, in one embodiment, to create the constructed image 400, the processing server 140 may use the date/time information for each frame to verify that the appropriate frames are combined. In another embodiment, the processing server 140 may use the camera identifier information to ensure that the frames are combined in the correct sequence. The metadata included with each frame 402-428 ensures that individual frames are combined correctly to create a 360 degree image for a virtual reality system.

FIG. 5 illustrates a user interface 500 for the camera system 130, according to one embodiment. The user interface 500 may be, e.g., the user interface 340. The user interface 500 allows a user to control the camera system 130. The user interface 500 includes exposure controls 510, file type controls 520, activation controls 530, and a preview area 540.

The exposure controls 510 allow a user to control and adjust the exposure settings of the camera assembly 310. The exposure controls 510 may include brightness, aperture, shutter, and gain settings. In some embodiments, the exposure settings may be determined from a principal camera in the camera assembly 310, or the exposure settings may be determined from all of the cameras in the camera assembly 310. The determined settings may serve as initial settings, from which the user can adjust using the exposure controls 510. Once the exposure controls 510 have been adjusted to the desired settings, the desired settings can be provided to each camera in the camera assembly 310.

The file type controls 520 allow a user to control the format in which image information is captured. The file type controls 520 may include various file types for images (e.g..jpeg, .tif, .png, etc.), audio (e.g..aac, .mp3, .wav, etc.), and/or video (e.g..mpg, .mov, .wmv, etc.). Some embodiments may allow a user to control the file type for each individual type of image information.

The activation controls 530 allow a user to control the operation of the camera assembly 310. The activation controls 530 may include, but are not limited to, options to power the camera assembly 310 on and off, to activate the camera assembly 310 to capture image information, to reset the settings of the camera assembly 310, to activate the processing server 140 to start or stop processing the captured image information, among other functionalities for the camera system 130.

The preview area 540 allows a user to preview an image constructed from the image information captured by the cameras of the camera assembly 310. The preview area 540 assists the user in determining desired exposure settings of the camera assembly 310 and/or desired positioning of the camera assembly 310 within the local area. The preview area 540 ensures that the camera assembly 310 is capturing image information to construct desired 3D-360 degree content for a virtual reality system.

In some embodiments, the user interface 340 also allows a user to control the processing server 140, access the data store 120, and access the data store 320. In the embodiment of FIG. 5, the user interface 340 includes settings (e.g. brightness, exposure, shutter, gain), an image preview, and metadata associated with the image preview. The settings may be modified by the user, and the settings are sent to the camera controller 350, which commands the camera assembly 310 and implements the camera settings globally onto the peripheral cameras 210 and axis cameras. The user interface 340 may be accessed on any device that has a network connection to the network 105.

### Additional Configuration Information

The foregoing description of the embodiments of the disclosure has been presented for the purpose of illustration; it is not intended to be exhaustive or to limit the disclosure to the precise forms disclosed.

Some portions of this description describe the embodiments of the disclosure in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the disclosure may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the disclosure may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the subject matter. It is therefore intended that the scope of the disclosure be limited not by this detailed description, but rather by any claims that issue on an application based hereon. Accordingly, the disclosure of the embodiments is intended to be illustrative, but not limiting, of the scope of the disclosure, which is set forth in the following claims.

## Claims

1. A camera system comprising:
a plurality of peripheral cameras (210), the peripheral cameras (210) arranged around a center point (218) such that an optical axis of each camera (210) is within a plane and a field of view (236,238,240) of each camera (210) faces away from the center point (218), and that outside of a threshold distance any object (242,244) in a portion of a local area is within a field of view (236,238,240) of at least two peripheral cameras (210);
at least one top axis camera (212,214;260,265) that is positioned such that an optical axis of the at least one top axis camera (212,214;260,265) is along an alignment axis (216) that runs perpendicular to the plane through the center point (218);
a first rigid plate (202) positioned along the alignment axis (216) such that the alignment axis (216) bisects a center of the first frigid plate (202), the first rigid plate (202) including a first top surface (220) and a first bottom surface (222), the first top surface (220) coupled to a first mounting surface of the top axis camera (212) by a top axis mount (206) centred along the alignment axis (216), such as to allow the top axis camera (212) to be vertically offset from the first top surface (220), the first bottom surface (222) coupled to first mounting surfaces of the plurality of peripheral cameras (210); and
a second rigid plate (204) being parallel to the first rigid plate (202) and positioned along the alignment axis (216) such that the alignment axis (216) bisects the center of the second frigid plate (204), the second rigid plate (204) including a second top surface (226) coupled to second mounting surfaces of the plurality of peripheral cameras (210) and a second bottom surface (228) to which a bottom axis camera (214,265) is coupled,
wherein the bottom axis camera (214;265) is positioned such that an optical axis of the bottom axis camera (214;265) is along the alignment axis (216) that runs through the center point (218), and the center point (218) is between the top axis camera (212) and the bottom axis camera (214;265),
wherein the camera system further comprises a bottom axis mount (208), centred along the alignment axis (216) and configured to secure the bottom axis camera (214,265) to the second bottom surface (228) of the second rigid plate (204) such that the bottom axis camera (214,265) is vertically offset from the second bottom surface (228) of the second rigid plate (204), and
wherein the axis mounts (206,208) are substantially cylindrical and hollow within.

2. The camera system of claim 1, wherein the first plate (202) and the second plate (204) are disk-shaped.

3. The camera system of claim 1 or 2, further comprising:
a support structure (270,275) that is coupled to the second bottom surface (228), the support structure (270,275) configured to support the camera system.

4. The camera system of claim 3, further comprising a second bottom axis camera (260) that is coupled to the second bottom surface (228) of the second rigid plate (204), and the second bottom axis camera (260) is positioned such that a second optical axis of the second bottom axis camera (260) is parallel to the alignment axis (216) that runs through the center point (218), and that the support structure (270,275) is parallel to and in between second optical axis and the alignment axis (216).

5. The camera system of any of claims 1 to 4, further comprising:
a camera controller (350) configured to:
instruct the camera system to generate image information of the local area, and
provide the image information to a processing server (140), wherein the processing server (140) generates content using the image information, and the generated content includes a 3 dimensional (3D) portion and a plurality of two-dimensional (2D) portions, the 3D portion corresponding to portions of the content generated using image information from the peripheral cameras (210) and the 2D portion corresponding to portions of the content generated using image information from the at least one axis camera (212,214;260,265).

6. The camera system of any of claims 1 to 5, wherein the at least one axis camera (212,214;260,265) has a field of view that is larger than a field of view (236,238,240) of each of the peripheral cameras (210).

## Patentansprüche

1. Kamerasystem, umfassend:
eine Vielzahl von peripheren Kameras (210), wobei die peripheren Kameras (210) so um einen Mittelpunkt (218) angeordnet sind, dass eine optische Achse jeder Kamera (210) innerhalb einer Ebene und eines Sichtfelds (236, 238, 240) jeder Kamera (210) vom Mittelpunkt (218) wegzeigt und dass sich außerhalb einer Schwellendistanz ein beliebiges Objekt (242, 244) in einem Abschnitt eines lokalen Bereichs innerhalb eines Sichtfelds (236, 238, 240) von mindestens zwei peripheren Kameras (210) befindet;
mindestens eine obere Achsenkamera (212, 214; 260, 265), die so positioniert ist, dass eine optische Achse der mindestens einen oberen Achsenkamera (212, 214; 260, 265) entlang einer Ausrichtungsachse (216) verläuft, die senkrecht zur Ebene durch den Mittelpunkt (218) verläuft;
eine erste starre Platte (202), die so entlang der Ausrichtungsachse (216) positioniert ist, dass die Ausrichtungsachse (216) ein Zentrum der ersten starren Platte (202) schneidet, wobei die erste starre Platte (202) eine erste Oberseite (220) und eine erste Unterseite (222) enthält, wobei die erste Oberseite (220) mit einer oberen Achsenhalterung (206), die entlang der Ausrichtungsachse (216) zentriert ist, an eine erste Montagefläche der oberen Achsenkamera (212) gekoppelt ist, um zu ermöglichen, dass die obere Achsenkamera (212) vertikal gegenüber der ersten Oberseite (220) versetzt ist, wobei die erste Unterseite (222) an die ersten Montageflächen der Vielzahl der peripheren Kameras (210) gekoppelt ist; und
eine zweite starre Platte (204), die zur ersten starren Platte (202) parallel ist und so entlang der Ausrichtungsachse (216) positioniert ist, dass die Ausrichtungsachse (216) das Zentrum der zweiten starren Platte (204) schneidet, wobei die zweite starre Platte (204) eine zweite Oberseite (226), die an zweite Montagefläche der Vielzahl der peripheren Kameras (210) gekoppelt ist, und eine zweite Unterseite (228) enthält, an die eine untere Achsenkamera (214; 265) gekoppelt ist, wobei die untere Achsenkamera (214; 265) so positioniert ist, dass eine optische Achse der unteren Achsenkamera (214; 265) entlang der Ausrichtungsachse (216) verläuft, die durch den Mittelpunkt (218) verläuft, und sich der Mittelpunkt (218) zwischen der oberen Achsenkamera (212) und der unteren Achsenkamera (214; 265) befindet,
wobei das Kamerasystem ferner eine untere Achsenhalterung (208) umfasst, die entlang der Ausrichtungsachse (216) zentriert ist und ausgelegt ist, die untere Achsenkamera (214, 265) an der zweiten Unterseite (228) der zweiten starren Platte (204) zu sichern, sodass die untere Achsenkamera (214, 265) vertikal gegenüber der zweiten Unterseite (228) der zweiten starren Platte (204) versetzt ist, und wobei die Achsenhalterungen (206, 208) im Wesentlichen zylindrisch und innen hohl sind.

2. Kamerasystem nach Anspruch 1, wobei die erste Platte (202) und die zweite Platte (204) scheibenförmig sind.

3. Kamerasystem nach Anspruch 1 oder 2, ferner umfassend:
eine Trägerstruktur (270, 275), die an die zweite Unterseite (228) gekoppelt ist, wobei die Trägerstruktur (270, 275) ausgelegt ist, das Kamerasystem zu tragen.

4. Kamerasystem nach Anspruch 3, das ferner eine zweite untere Achsenkamera (260) umfasst, die an die zweite Unterseite (228) der zweiten starren Platte (204) gekoppelt ist, und wobei die zweite untere Achsenkamera (260) so positioniert ist, dass eine zweite optische Achse der zweiten unteren Achsenkamera (260) parallel zur Ausrichtungsachse (216) verläuft, die durch den Mittelpunkt (218) verläuft, und dass sich die Trägerstruktur (270, 275) parallel zur und zwischen der zweiten optischen Achse und der Ausrichtungsachse (216) befindet.

5. Kamerasystem nach einem der Ansprüche 1 bis 4, ferner umfassend:
eine Kamerasteuerung (350), die ausgelegt ist:
das Kamerasystem anzuweisen, Bildinformationen des lokalen Bereichs zu generieren, und
die Bildinformationen einem Verarbeitungsserver (140) zu liefern, wobei der Verarbeitungsserver (140) einen Inhalt unter Verwendung der Bildinformationen zu generieren und der generierte Inhalt einen 3-dimensionalen (3D) Abschnitt und eine Vielzahl von zweidimensionalen (2D) Abschnitten enthält, wobei der 3D-Abschnitt Abschnitten des unter Verwendung der Bildinformationen von den peripheren Kameras (210) generierten Inhalts entspricht und der 2D-Abschnitt Abschnitten des unter Verwendung der Bildinformationen von der mindestens einen Achsenkamera (212, 214; 260, 265) entspricht.

6. Kamerasystem nach einem der Ansprüche 1 bis 5, wobei die mindestens eine Achsenkamera (212, 214; 260, 265) ein Sichtfeld aufweist, das größer als ein Sichtfeld (236, 238, 240) jeder der peripheren Kameras (210) ist.

## Revendications

1. Système de caméras comprenant:
une pluralité de caméras périphériques (210), les caméras périphériques (210) étant agencées autour d'un point central (218) de telle sorte qu'un axe optique de chaque caméra (210) se trouve dans un plan et un champ de vision (236, 238, 240) de chaque caméra (210) est tourné à l'opposé du point central (218), et de telle sorte qu'à l'extérieur d'une distance de seuil, un quelconque objet (242, 244) dans une partie d'une zone locale se trouve dans un champ de vision (236, 238, 240) d'au moins deux caméras périphériques (210);
au moins une caméra d'axe supérieur (212, 214; 260, 265) qui est positionnée de telle sorte qu'un axe optique de l'au moins une caméra d'axe supérieur (212, 214; 260, 265) est le long d'un axe d'alignement (216) qui s'étend de manière perpendiculaire au plan en passant par le point central (218);
une première plaque rigide (202) positionnée le long de l'axe d'alignement (216) de telle sorte que l'axe d'alignement (216) scinde en deux un centre de la première plaque rigide (202), la première plaque rigide (202) comprenant une première surface supérieure (220) et une première surface inférieure (222), la première surface supérieure (220) étant couplée à une première surface de montage de la caméra d'axe supérieur (212) par un support d'axe supérieur (206) centré le long de l'axe d'alignement (216), de façon à permettre à la caméra d'axe supérieur (212) d'être décalée verticalement par rapport à la première surface supérieure (220), la première surface inférieure (222) étant couplée à des premières surfaces de montage de la pluralité de caméras périphériques (210); et
une seconde plaque rigide (204) qui est parallèle à la première plaque rigide (202) et positionnée le long de l'axe d'alignement (216) de telle sorte que l'axe d'alignement (216) scinde en deux le centre de la seconde plaque rigide (204), la seconde plaque rigide (204) comprenant une seconde surface supérieure (226) couplée à des secondes surfaces de montage de la pluralité de caméras périphériques (210) et une seconde surface inférieure (228) à laquelle une caméra d'axe inférieur (214, 265) est couplée, la caméra d'axe inférieur (214; 265) étant positionnée de telle sorte qu'un axe optique de la caméra d'axe inférieur (214; 265) est le long de l'axe d'alignement (216) qui s'étend en passant par le point central (218), et le point central (218) étant entre la caméra d'axe supérieur (212) et la caméra d'axe inférieur (214; 265),
le système de caméras comprenant en outre un support d'axe inférieur (208), centré le long de l'axe d'alignement (216) et configuré pour fixer la caméra d'axe inférieur (214, 265) à la seconde surface inférieure (228) de la seconde plaque rigide (204) de telle sorte que la caméra d'axe inférieur (214, 265) est décalée verticalement par rapport à la seconde surface inférieure (228) de la seconde plaque rigide (204), et les supports d'axe (206, 208) étant sensiblement cylindriques et creux à l'intérieur.

2. Système de caméras selon la revendication 1, dans lequel la première plaque (202) et la seconde plaque (204) ont une forme de disque.

3. Système de caméras selon la revendication 1 ou 2, comprenant en outre: une structure de support (270, 275) qui est couplée à la seconde surface inférieure (228), la structure de support (270, 275) étant configurée pour porter le système de caméras.

4. Système de caméras selon la revendication 3, comprenant en outre une seconde caméra d'axe inférieur (260) qui est couplée à la seconde surface inférieure (228) de la seconde plaque rigide (204), et la seconde caméra d'axe inférieur (260) étant positionnée de telle sorte qu'un second axe optique de la seconde caméra d'axe inférieur (260) est parallèle à l'axe d'alignement (216) qui s'étend en passant par le point central (218), et de telle sorte que la structure de support (270, 275) est parallèle à et se trouve entre le second axe optique et l'axe d'alignement (216).

5. Système de caméras selon l'une quelconque des revendications 1 à 4, comprenant en outre:
un dispositif de commande de caméras (350) configuré pour:
donner l'instruction au système de caméras de générer des informations d'image de la zone locale, et
fournir les informations d'image à un serveur de traitement (140), le serveur de traitement (140) générant un contenu à l'aide des informations d'image, et le contenu généré comprenant une partie tridimensionnelle (3D) et une pluralité de parties bidimensionnelles (2D), la partie 3D correspondant à des parties du contenu générées à l'aide d'informations d'image provenant des caméras périphériques (210) et la partie 2D correspondant à des parties du contenu générées à l'aide d'informations d'image provenant de l'au moins une caméra d'axe (212, 214; 260, 265).

6. Système de caméras selon l'une quelconque des revendications 1 à 5, dans lequel l'au moins une caméra d'axe (212, 214; 260, 265) a un champ de vision qui est plus grand qu'un champ de vision (236, 238, 240) de chacune des caméras périphériques (210).
